# EUROPÄISCHE PATENTSCHRIFT

(11) **EP 1 707 311 B1**
(45) Veröffentlichungstag und Bekanntmachung des Hinweises auf die Patenterteilung: **24.11.2010**
(21) Anmeldenummer: 06002349.6
(22) Anmeldetag: 06.02.2006
(51) Int. Cl.: G05B 19/19, B23Q 15/013

(54) **Verfahren und Vorrichtung zum Bearbeiten von plattenförmigen Werkstücken**
Method and device for machining flat workpieces
Procédé et dispositif pour l'usinage de pièces en forme de plaque

(30) Priorität: 31.03.2005 DE 102005014651
(43) Veröffentlichungstag der Anmeldung: 04.10.2006
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE)
(74) Vertreter: HOFFMANN EITLE

(56) Entgegenhaltungen:
- DE-A1- 19 741 163
- DE-A1- 19 911 789
- DE-C1- 10 124 081
- US-A- 4 904 152
- US-A- 5 056 038

## Beschreibung

### Gebiet der Erfindung

Die vorliegende Erfindung bezieht sich auf ein Verfahren und auf eine Vorrichtung zum Bearbeiten von plattenförmigen Werkstücken zum Einsatz in Durchlaufmaschinen zur Bearbeitung von bewegten plattenförmigen Werkstücken aus Holz oder holzähnlichen Materialien.

### Stand der Technik

Im Bereich der Durchlaufmaschinen zur Bearbeitung plattenförmiger Werkstücke werden in verschiedenen Bearbeitungsschritten Nachbearbeitungsaggregate eingesetzt. Als Beispiele seien hier Kappaggregate für überstehende Kantenstreifen oder Formfräsaggregate zur Feinbearbeitung der Kantenränder genannt. Die Bezeichnung "Aggregat" umfasst hierbei im allgemeinen das eigentliche Werkzeug, z.B. die Kappsäge, sowie zusätzliche Aggregatsbestandteile wie Anschläge und Supports. Mithilfe der Nachbearbeitungsaggregate muss zum Beispiel die in Durchlaufrichtung vordere und hintere Kante, sowie unter Umständen die Seitenkanten des Werkstücks, schnell und präzise bearbeitet werden. Die Nachbearbeitungsaggregate müssen hierbei an einem bewegten Werkstück arbeiten, und somit die Durchlaufgeschwindigkeit bei der Bearbeitung berücksichtigen. Die Bearbeitung des Werkstücks erfolgt durch eine überlagernde Bewegung des Nachbearbeitungsaggregats in Längs- und in Querrichtung relativ zum Werkstück und aufgrund der Durchlaufbewegung erfordert das Positionieren bzw. das Zurückholen des Aggregats hohe Beschleunigungs- und Verzögerungskräfte beim Anfahren und Abbremsen. Ein solches Nachbearbeitungsaggregat, insbesondere als Schneidaggregat für Durchlaufmaschinen, ist in der DE 101 24 081 Cl offenbart.

Durch die stetige Erhöhung der Durchlaufgeschwindigkeit auf derzeit 10-18 m/min (bis zu 30 m/min sind geplant) zur Reduzierung der Bearbeitungszeiten und damit eingehender Stückzahlerhöhung pro Zeiteinheit ergeben sich zunehmend Probleme im Hinblick auf die Anforderungen an die Genauigkeit der Bearbeitung.

Im Stand der Technik gibt es auf dem Gebiet der linearen Nachbearbeitungstechnik im Durchlaufbereich zwei unterschiedliche Antriebskonzepte zur Positionierung von Nachbearbeitungsaggregaten.

Zum einen kann das Werkzeug zusammen mit seinem Support und Anschlag servomotorisch mittels herkömmlicher Rotationsmotoren gesteuert werden, wie z.B. in der oben erwähnten DE 101 24 081 C1. Hierzu muss die zur Positionierung notwendige lineare Bewegung über Übersetzungsgetriebe (z.B. Schneckengetriebe) bewirkt werden, so dass der Antrieb "hart" die vorgegebene Lageregelung beibehält. Da sowohl bei den Werkstücken als auch im Kettenantrieb des Werkstückvorschubs ("Polygoneffekt") Toleranzen auftreten, die nicht vom "harten" Servoantrieb kompensiert werden können, sind aufwendige und teuere Tastungen und Feedback-Schleifen notwendig, um die gewünschte Positionierungsgenauigkeit zu erzielen. Bei den eingangs genannten immer höher werdenden Vorschubgeschwindigkeiten können jedoch die Toleranzen selbst durch eine gefederte Tastung nicht mehr ausgeglichen werden, da sogenannte "Einschwingamplituden" auftreten, die sich erst mit einer gewissen zeitlichen Verzögerung wieder einpendeln. Eine stärkere Vorspannung von Federanordnungen, welche die Amplitude begrenzen sollen, ist aufgrund potentieller Beschädigungen des Werkstücks nur bedingt möglich.

Andererseits kann das Aggregat mittels pneumatischer Positionierantriebe wie zum Beispiel pneumatischer Zylinder an das zu bearbeitende Werkstück geführt werden. Pneumatische Systeme sind jedoch durch eine gewisse Trägheit gekennzeichnet, die auf die Kompressibilität des Mediums Luft zurückzuführen ist. Diese Kompressibilität erschwert sowohl eine genaue Positionierung des Bearbeitungswerkzeugs an dem Werkstück als auch eine hohe Positioniergeschwindigkeit bzw. - Beschleunigung. Es ist daher notwendig einen gefederte Tastung einzusetzen. Es treten somit die gleichen Probleme wie beim Einsatz von Servomotoren auf. Zudem ist die Einstellung und der Montageaufwand eines derartigen pneumatischen Antriebs aufgrund der Vielzahl von Drosseln, Schläuchen und Ventilinseln nicht unerheblich, was zu potentiellen Fehlerquellen führt und zusätzlich Kosten verursacht.

Ferner offenbart die US 4,904,152 A einen Industrieroboter, bei dem die Bewegung eines Messarms bahngeregelt und kraftgeregelt erfolgen kann.

### Darstellung der Erfindung

Aufgabe der vorliegenden Erfindung ist es, eine Verfahrensweise und eine Vorrichtung für die Nachbearbeitung von bewegten Werkstücken zu entwickeln, die einerseits eine hoch-dynamische Werkzeugpositionierung ermöglicht und gleichzeitig das Nachbearbeitungsaggregat weich und präzise an das zu bearbeitende Werkstück anlegt.

Diese Aufgabe wird durch ein Verfahren mit den Merkmalen des Anspruchs 1 sowie durch eine Vorrichtung mit den Merkmalen des Anspruchs 10 gelöst. Vorteilhafte Ausführungen folgen aus den Unteransprüchen.

Das erfindungsgemäße Verfahren zum Positionieren eines Werkzeugs an einem bewegten Werkstück verwendet einen Antrieb, der einen Linearmotor umfasst. Dieser Linearmotor wird in einem ersten Schritt über einen vorgegebenen Weg bahngeregelt betrieben und im Anschluss daran in einem zweiten Schritt beim Anlegevorgang auf Kraftregelung umgeschaltet. In diesem Zusammenhang bedeutet Bahnregelung die "harte" Einhaltung der durch die Steuerung vorgegebenen Bewegung seitens des Antriebs, z.B. zur Aufsynchronisierung der Werkzeugbewegung auf den Werkstückvorschub. Es werden also von der Steuerung Parameter wie Beschleunigung und Geschwindigkeit vorgegeben. Kraftregelung hingegen bedeutet, dass der Antrieb die Bewegung unter Berücksichtigung einer vorgegebenen Kraft durchführt, was aufgrund des den Linearmotoren eigenen, direkten "Feedbacks" möglich ist. Die Steuerung erhält hierbei ohne Verzögerung durch Antriebstoleranzen oder Antriebsträgheit sofort die auf den Antrieb einwirkende Belastung. Dadurch ist es möglich, während der Bahnregelung eine hochdynamische Bewegung des Werkzeugs und seines Supports, d.h. hohe Beschleunigung und Abbremsung, zu erzielen und kurz vor dem eigentlichen Anlegen des Werkzeugs am Werkstück auf Kraftregelung umzuschalten, wodurch der Antrieb seine Bewegung in Funktion der von dem Werkzeug erfahrenen Gegenkraft gezielt und verzögerungslos abbremst. Das Werkstück wird dabei nicht beschädigt, da eine vorgegebene maximale Anlegekraft nicht überschritten wird. Dies ermöglicht es, trotz der hohen Beschleunigung eine hohe Bearbeitungsqualität sicherzustellen.

Der Einsatz des Linearmotors hat zudem weitere Vorteile. So kann zum Beispiel auf eine kostenintensive und die Komplexität erhöhende gefederte Tastung verzichtet werden. Da Linearmotoren absolut verschleißfreie, lineare Bewegungen ohne Einsatz von Getriebeelementen wie z.B. Ritzeln oder dergleichen erzeugen, können Verschleißteile und die damit verbundenen Wartungs- und Anschaffungskosten eingespart werden.

Erfindungsgemäß erfolgt das Positionieren des Werkzeugs an dem bewegten Werkstück mittels des Antriebs über einen Anschlag. Dieser dient als unkomplizierte Tastung, die das präzise Positionieren ermöglicht.

Das Umschalten von Bahn- auf Kraftregelung kann vorteilhafterweise unabhängig voneinander für einzelne Achsen eines mehrachsig positionierbaren Werkzeugs durchgeführt werden. Dies dehnt die oben genannten Vorteile auf alle Bewegungen relativ zum Werkstück aus.

Das erfindungsgemäße Verfahren kann bevorzugt unter Einsatz eines leistenförmigen Linearmotors durchgeführt werden. Derartige Linearmotoren zeichnen sich durch geringe Kosten aus.

Es können aber auch kolbenförmige Linearmotoren bevorzugt zum Einsatz kommen. Diese haben den Vorteil der kompakten Bauweise, die Verschmutzungen der Motorbestandteile minimiert und daher in besonders staub- oder schmutzbelasteten Umgebungen vorteilhaft ist.

In einer weiteren Ausführungsform kann das Umschalten von Bahn- auf Kraftregelung des erfindungsgemäßen Verfahrens unmittelbar vor dem Erreichen des Anschlags seitens des Werkstücks erfolgen. Dadurch wird eine hochpräzise Kontrolle des Anlegevorgangs sichergestellt.

Alternativ kann das Umschalten von Bahn- auf Kraftregelung des erfindungsgemäßen Verfahrens beim Erreichen des Anschlags seitens des Werkstücks erfolgen.

Vorteilhaft kann auch während der Kraftregelung der Antrieb mit einer vorgegebenen oder variablen Anlegekraft, mit der das Werkzeug an das Werkstück angelegt wird, betrieben werden. Dadurch lassen sich selbst hochempfindliche Werkstücke beschädigungsfrei bearbeiten.

Das erfindungsgemäße Verfahren kann zudem das bevorzugte Merkmal aufweisen, dass während der Kraftregelung die Bewegung des Antriebs unabhängig von einer Steuerung der Bewegung des Werkstücks ist und Laufungenauigkeiten des bewegten Werkstücks beim Anlegen ausgeglichen werden. Werkstück- oder Vorschubtoleranzen können daher gezielt kompensiert werden.

Des weiteren ist das Verfahren bevorzugt dadurch gekennzeichnet, dass der Anschlag eine Reaktionskraft des Werkstücks über den Antrieb an dessen Steuerung verzögerungslos übermittelt. Die Steuerung kann daher den Linearmotor gezielt ansteuern und jederzeit ein präzises Anliegen am Werkstück unter Ausgleich von Werkstück- und Vorschubtoleranzen gewährleisten.

Eine zur Lösung der oben genannten Aufgabe geeignete, erfindungsgemäße Vorrichtung nach Anspruch 10 ermöglicht hohe Beschleunigungen und dadurch eine Erhöhung der Vorschubgeschwindigkeit, gleichzeitiges präzises und beschädigungsfreies Anlegen an das Werkstück, vereinfachten Aufbau und erhebliche Kostensenkung aufgrund der oben erwähnten Faktoren.

### Kurze Beschreibung der Zeichnungen

Im folgenden wird die Erfindung anhand eines Ausführungsbeispiels gemäß den Figuren 1 bis 2 erläutert. Als Beispiel dient hierbei die Bearbeitung einer Vorderkante eines plattenförmigen Werkstücks mittels eines Kappaggregats.
Figur 1(a) zeigt den ersten Schritt des Verfahrens, bei dem die Bewegung eines Kappwerkzeugs samt Kappanschlag auf die Vorschubbewegung eines Werkstücks aufsynchronisiert wird und das Kappwerkzeug sich bahngeregelt dem Werkstück annähert.
Figur 1(b) zeigt den Zustand, bei dem das Werkstück den Kappanschlag erreicht und bei dem im zweiten Schritt des Verfahrens der Antrieb auf Kraftregelung umgeschaltet wird.
Figur 1(c) zeigt den eigentlichen Nachbearbeitungsvorgang, d.h. das Absägen des überstehenden Kantenmaterials.
Figur 1(d) zeigt den Zustand nach der Bearbeitung, bei dem die Bewegung des Kappwerkzeugs wieder auf Bahnregelung zurückgeschaltet wird.
Figur 1(e) zeigt das Zurückfahren des Kappwerkzeugs und des Anschlags in die Ausgangsposition.
Figur 2(a) ist ein Geschwindigkeits-Zeit-Diagramm, und Figur 2(b) ist ein Geschwindigkeits-Weg-Diagramm, welche die Bewegung des Nachbearbeitungsaggregats und die beiden Regelungsregime des Antriebs veranschaulichen.

### Wege zur Ausführung der Erfindung

Im folgenden wird die vorliegende Erfindung anhand eines Ausführungsbeispiels beschrieben, bei dem wie erwähnt als Nachbearbeitungsaggregat eine Kappvorrichtung zum bündigen Kappen von überstehendem Kantenmaterial **5** an der Vorderkante von plattenförmigen Werkstücken dargestellt ist.

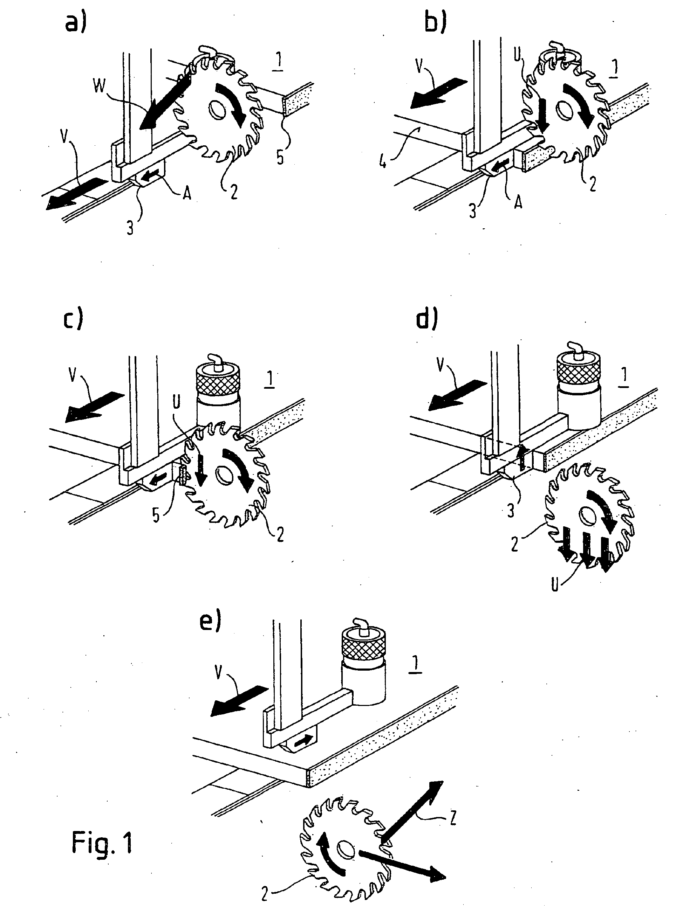

In Figur 1(a) ist der Ausgangszustand gezeigt, bei dem die Kappeinheit, die ein Sägeblatt **2** (Kappwerkzeug), einen Anschlag **3** und einen (nicht gezeigten) Support umfasst, von ihrer Ausgangsposition auf die Vorschubsgeschwindigkeit des Werkstücks **1** beschleunigt wird. Dieser Schritt wird auch "Aufsynchronisation" genannt und erfordert hohe Beschleunigungskräfte und Geschwindigkeiten, zumal das Werkstück 1 selbst sich mit bis zu 30 m/min vorwärts bewegen kann. Der Antrieb der Kappeinheit, der einen Linearmotor umfasst, wird hierzu mit vom Vorschub des Werkstücks **1** vorgegebenen Parametern, wie Vorschubgeschwindigkeit und Werkstückposition, angesteuert und setzt diese Ansteuerung verzögerungslos in eine Bewegung zum Werkstück **1** hin um. Aufgrund des Zusammenhangs der Ansteuerung des Antriebs mit der Vorschubbewegung des Werkstücks (der "Bahn") wird daher von "bahngeregelter" Steuerung gesprochen.

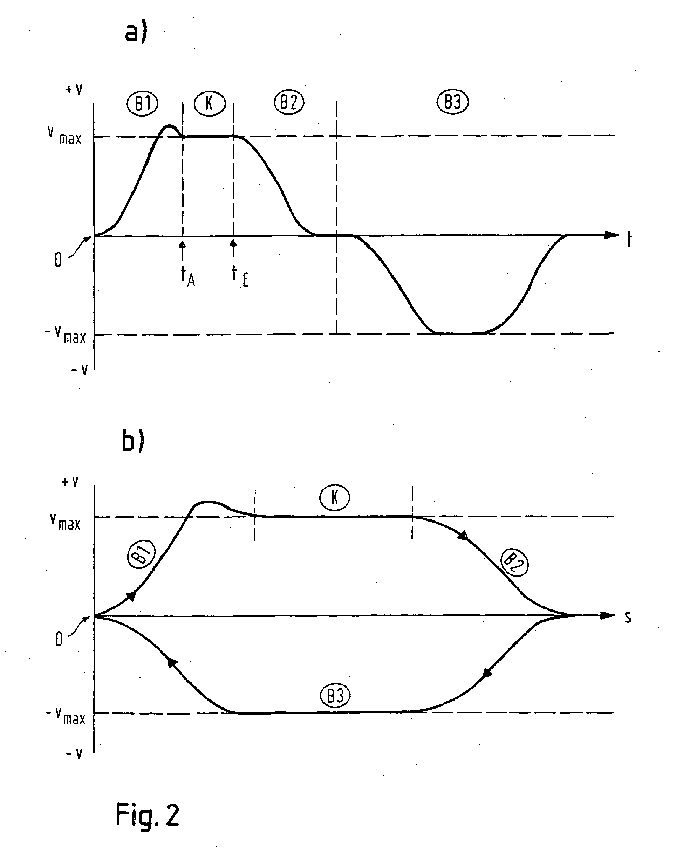

In der Figur 1(a) sind also der mit Pfeil **V** bezeichnete Vorschub des Werkstücks **1,** die mit Pfeil **W** bezeichnete Bewegung der Säge **2,** und die mit Pfeil **A** bezeichnete Bewegung des Kappanschlags **3** dargestellt. Die Bewegung der Säge setzt sich hierbei aus einer Vorwärtsbewegung zur Aufsynchronisation mit dem Vorschub und einer Abwärtsbewegung (in Kapprichtung) zusammen. Die Bewegung **A** des Kappanschlags entspricht der Vorwärtsbewegungskomponente der Bewegung **W** der Säge **2.** In Figur 2 ist diese Vorwärtsbewegung als Bereich **B1** veranschaulicht. Der Antrieb wird bahngeregelt mit maximaler Kraft angesteuert und die Kappeinheit wird von 0 auf die Vorschubgeschwindigkeit des Werkstücks, vₘₐₓ, beschleunigt.

Kurz bevor der Kappanschlag **3** die Vorderkante **4** des Werkstücks 1 erreicht, wird ein Sensor (nicht dargestellt) ausgelöst, der die Regelungselektronik des Linearmotors auf Kraftregelung umschaltet. Die Kraft, mit welcher der Linearmotor fährt, wird verringert und auf einen Wert eingestellt, der eine Beschädigung des Werkstücks beim Anlegen ausschließt. Der Anlegevorgang selbst ist in Figur 2 als Zeitpunkt t_{A} angedeutet. Ab diesem Zeitpunkt fahren Werkstück **1,** Anschlag **3** und Kappwerkzeug **2** synchron und kraftgeregelt (Bereich **K**) mit konstanter Geschwindigkeit vₘₐₓ. Die Säge **2** bewegt sich zudem zur Durchführung des Kappschnitts nach unten (Pfeil **U**). Daraufhin erfolgt der Kappschnitt des überstehenden Kantenmaterials **5** (Figur 1(c)), wobei sich die Säge weiter nach unten (Pfeil **U**) bewegt. Während des gesamten Anlege- und Kappvorgangs werden Toleranzen in der Werkstückbewegung, z.B. aufgrund des sogenannten Polygoneffekts des Kettenvorschubs, sowie in den Abmessungen des Werkstücks **1** aufgrund der Kraftregelung des Linearmotors ausgeglichen. Dies ist daher möglich, da die Reaktionskraft des Werkstücks **1** auf den Anschlag, die aufgrund der Toleranzen schwankt, direkt und verzögerungslos über den Antrieb an die Antriebssteuerung übermittelt wird und diese die dem Linearmotor vorgegebene Kraft dementsprechend regelt. Es lässt sich somit trotz hoher Beschleunigungen und der erwähnten Toleranzen eine hohe Bearbeitungsqualität erzielen.

Nach Beendigung des Kappvorgangs wird die Kappsäge **2** schnell nach unten (3-fach Pfeil **U**) und der Kappanschlag **3** nach oben vom Werkstück **1** weg entfernt. Dies ist in Figur 1(d) dargestellt. Wie aus Figur 1(e) ersichtlich ist, wird die Kappsäge **2** bei Erreichen der untersten Position seitlich vom Werkstück **1** weg nach außen bewegt, dann von der Geschwindigkeit vₘₐₓ auf 0 abgebremst und in entgegengesetzter Richtung zum Vorschub auf -vₘₐₓ beschleunigt und zur Ausgangslage **O** zurückgefahren (Pfeil **Z**). Der Anschlag **3,** der sich nun über dem Werkstück 1 befindet, wird ebenfalls in die Ausgangslage **O** zurückgefahren. Dieser Bewegungsvorgang ist in Figur 2 als Bereiche **B2** und **B3** veranschaulicht. Im Bereich **B2** wird der Antrieb zu dem Zeitpunkt t_{E}, an dem der Kappvorgang beendet ist, wieder auf Bahnregelung zurückgeschaltet und die Bewegung des Antriebs auf 0 abgebremst. Im Bereich **B3** wird auf -vₘₐₓ beschleunigt und zur Ausgangsposition **O** zurückgefahren.

Das in den folgenden Patentansprüchen offenbarte Verfahren und ermöglicht es also, große Beschleunigungen und Geschwindigkeiten der Nachbearbeitungsaggregate zu erzielen, ohne hierbei Abstriche bei der Bearbeitungsqualität zu machen. Das Einsparen von federnden Tastelementen und Feedback-Systemen ermöglicht einerseits reduzierte Tastdrücke, die sich positiv auf die erzielte Werkstückqualität auswirken, und verringert andererseits die Anschaffungs- und Betriebskosten. Schließlich ermöglicht der Einsatz von Linearmotoren die Einsparung von Übersetzungsgetrieben und anderen Konstruktionselementen, die im Stand der Technik bisher notwendig waren. Dies führt zur einer Reduzierung der Verschleißteile und damit zu geringeren Wartungskosten und Ausfallzeiten.

## Patentansprüche

1. Verfahren zum Positionieren eines Werkzeugs (2) an einem bewegten Werkstück (1) mittels eines Antriebs, wobei
der Antrieb einen Linearmotor umfasst, der in einem ersten Schritt über einen vorgegebenen Weg bahngeregelt wird und im Anschluss daran in einem zweiten Schritt beim Anlegevorgang auf Kraftregelung umgeschaltet wird, wobei das Positionieren des Werkzeugs (2) an das bewegte Werkstück (1) mittels des Antriebs über einen Anschlag (3) erfolgt, und
nach dem Anlegevorgang das Werkstück (1) bei kraftgeregelter Bewegung von Werkstück (1) und Anschlag (3) mittels des Werkzeugs (2) bearbeitet wird.

2. Verfahren nach Anspruch 1, **dadurch gekennzeichnet, dass** das Umschalten von Bahn- auf Kraftregelung unabhängig voneinander für einzelne Achsen eines mehrachsig positionierbaren Werkzeugs (2) durchführbar ist.

3. Verfahren nach Anspruch 1 oder 2, **dadurch gekennzeichnet, dass** der Linearmotor leistenförmig ist.

4. Verfahren nach Anspruch 1 oder 2, **dadurch gekennzeichnet, dass** der Linearmotor kolbenförmig ist.

5. Verfahren nach einem der vorhergehenden Ansprüche, **dadurch gekennzeichnet, dass** das Umschalten von Bahn- auf Kraftregelung unmittelbar vor dem Erreichen des Anschlags (3) seitens des Werkstücks (1) erfolgt.

6. Verfahren nach einem der vorhergehenden Ansprüche, **dadurch gekennzeichnet, dass** das Umschalten von Bahn- auf Kraftregelung beim Erreichen des Anschlags (3) seitens des Werkstücks (1) erfolgt.

7. Verfahren nach einem der vorhergehenden Ansprüche, **dadurch gekennzeichnet, dass** während der Kraftregelung der Antrieb mit einer vorgegebenen oder variablen Anlegekraft, mit der das Werkzeug (2) an das Werkstück (1) angelegt wird, betrieben wird.

8. Verfahren nach einem der vorhergehenden Ansprüche, **dadurch gekennzeichnet, dass** während der Kraftregelung die Bewegung des Antriebs unabhängig von einer Steuerung der Bewegung des Werkstücks (1) ist und Laufungenauigkeiten des bewegten Werkstücks (1) beim Anlegen ausgeglichen werden.

9. Verfahren nach Anspruch 1, **dadurch gekennzeichnet, dass** der Anschlag (3) eine Reaktionskraft des Werkstücks (1) über den Antrieb verzögerungslos an dessen Steuerung übermittelt.

10. Vorrichtung zum Positionieren eines Werkzeugs (2) an einem bewegten Werkstück (1), umfassend
eine Fördereinrichtung zum Fördern des Werkstücks (1) in einer Vorschubrichtung (V),
ein Werkzeug (2) zum Bearbeiten des in Vorschubrichtung (V) geförderten Werkstücks (1),
einen Antrieb zum Positionieren des Werkzeugs (2) an dem bewegten Werkstück (1), der zumindest einen Linearmotor und einen an das Werkstück (1) anlegbaren Anschlag (3) umfasst und eine Steuerung aufweist, die eingerichtet ist, die Ansteuerung des Antriebs von Bahn- auf Kraftregelung und umgekehrt umzuschalten.

## Claims

1. Method for positioning a tool (2) on a moving workpiece (1) by means of a drive, wherein the drive comprises a linear motor which is regulated in its path over a predetermined distance in a first step and subsequently in a second step is switched to power regulation in the process of application, wherein positioning of the tool (2) on the moving workpiece (1) by means of the drive is effected via a stop (3), and after the process of application the workpiece (1) is worked by means of the tool (2) during power-regulated movement of workpiece (1) and stop (3).

2. Method according to claim 1, **characterised in that** switching from path to power regulation can be carried out independently of each other for individual axes of a tool (2) which can be positioned on multiple axes.

3. Method according to claim 1 or 2, **characterised in that** the linear motor is strip-like.

4. Method according to claim 1 or 2, **characterised in that** the linear motor is piston-like.

5. Method according to any of the preceding claims, **characterised in that** switching from path to power regulation is effected immediately before reaching the stop (3) on the part of the workpiece (1).

6. Method according to any of the preceding claims, **characterised in that** switching from path to power regulation is effected on reaching the stop (3) on the part of the workpiece (1).

7. Method according to any of the preceding claims, **characterised in that** during power regulation the drive is operated with a predetermined or variable application force with which the tool (2) is applied to the workpiece (1).

8. Method according to any of the preceding claims, **characterised in that** during power regulation the movement of the drive is independent of control of the movement of the workpiece (1), and running inaccuracies of the moving workpiece (1) are evened out during application.

9. Method according to claim 1, **characterised in that** the stop (3) transmits a reaction force of the workpiece (1) via the drive without delay to the control means thereof.

10. Apparatus for positioning a tool (2) on a moving workpiece (1), comprising
a conveying device for conveying the workpiece (1) in a direction of advance (V),
a tool (2) for working the workpiece (1) conveyed in the direction of advance (V),
a drive for positioning the tool (2) on the moving workpiece (1), which comprises at least one linear motor and a stop (3) which can be applied to the workpiece (1), and has a control means which is designed to switch control of the drive from path to power regulation and vice versa.

## Revendications

1. Procédé de positionnement d'un outil (2) sur une pièce d'oeuvre (1) déplacée, au moyen d'un dispositif d'entraînement, où
le dispositif d'entraînement comprend un moteur linéaire, soumis dans une première étape à une régulation de trajectoire sur un chemin prédéterminé et, subséquemment à cela, dans une deuxième étape, commuté à une régulation de force lors d'un processus d'application, le positionnement de l'outil (2) sur la pièce d'oeuvre (1) déplacée étant effectué au moyen du dispositif d'entraînement, par l'intermédiaire d'une butée (3), et
une fois le processus d'application accompli, la pièce d'oeuvre (1) est usinée au moyen de l'outil (2), alors que s'accomplit un déplacement, soumis à une régulation de force, de la pièce d'oeuvre (1) et de la butée (3).

2. Procédé selon la revendication 1, **caractérisé en ce que** la commutation, d'une régulation de trajectoire à une régulation de force, est susceptible d'être effectuée indépendamment les des autres pour des axes individuels d'un outil (2) susceptible d'être positionné selon plusieurs axes.

3. Procédé selon la revendication 1 ou 2, **caractérisé en ce que** le moteur linéaire est en forme de bande.

4. Procédé selon la revendication 1 ou 2, **caractérisé en ce que** le moteur linéaire est en forme de piston.

5. Procédé selon l'une des revendications précédentes, **caractérisé en ce que** la commutation, d'une régulation de trajectoire à une régulation de force, est effectuée avant atteinte de la butée (3) de la part de la pièce d'oeuvre (1).

6. Procédé selon l'une des revendications précédentes, **caractérisé en ce que** la commutation, d'une régulation de trajectoire à une régulation de force, est effectuée à l'atteinte de la butée (3) de la part de la pièce d'oeuvre (1).

7. Procédé selon l'une des revendications précédentes, **caractérisé en ce que**, pendant la régulation de force, le dispositif d'entraînement est exploité avec une force d'application prédéterminée ou variable, avec laquelle la pièce d'oeuvre (2) est appliquée sur l'outil (1).

8. Procédé selon l'une des revendications précédentes, **caractérisé en ce que**, pendant la régulation de force, le déplacement du dispositif d'entraînement est indépendant d'une commande du déplacement de la pièce d'oeuvre (1), et des imprécisions de déplacement de la pièce d'oeuvre (1) déplacée sont compensées lors de l'application.

9. Procédé selon la revendication 1, **caractérisé en ce que** la butée (3) transmet une force de réaction de la pièce d'oeuvre (1) par l'intermédiaire du dispositif d'entraînement, sans délai, à sa commande.

10. Dispositif de positionnement de l'outil (2) sur la pièce d'oeuvre (1) déplacée, comprenant :
un dispositif de transport, pour transporter la pièce d'oeuvre (1) dans une direction d'avancement (V),
un outil (2), pour usiner la pièce d'oeuvre (1) transportée dans la direction d'avancement (V),
un dispositif d'entraînement, pour positionner l'outil (2) sur la pièce d'oeuvre (1) déplacée, comprenant au moins un moteur linéaire et une butée (3), susceptible d'être appliquée sur la pièce d'oeuvre (1), et présente une commande, agencée pour commuter la commande du dispositif d'entraînement, d'une régulation de trajectoire à une régulation de force et inversement.
